# EUROPEAN PATENT SPECIFICATION

(11) **EP 1 803 689 B1**
(45) Date of publication and mention of the grant of the patent: **13.04.2016**
(21) Application number: 06127306.6
(22) Date of filing: 28.12.2006
(51) Int. Cl.: B01D 61/02, B01D 61/14, B01D 61/48, B01D 61/58, C02F 9/00, C02F 1/469, C02F 1/66

(54) **System for treating wastewater of an industrial plant, in particular of a power plant**
System zur Behandlung der Abwässer eines Industriewerkes, v.a. eines Kraftwerks
Système de traitement des eaux usées industrielles, en particulier d'une installation de production d'énergie

(30) Priority: 29.12.2005 IT MI20052520
(43) Date of publication of application: 04.07.2007
(73) Proprietor: ANSALDO ENERGIA S.P.A., 16152 Genova (IT)
(72) Inventor: Provera, Mauro, 15100, ALESSANDRIA (IT); Perpiglia, Federica, 16132, GENOVA (IT)
(74) Representative: Bergadano, Mirko

(56) References cited:
- EP-A2- 1 431 250
- US-B1- 6 461 512

## Description

The present invention relates to a system for treating the waters of an industrial plant, in particular a plant for generating energy (electric power station).

There is felt the need, in the design of a generic industrial plant and in particular of plants for generating energy, of developing solutions that will enable the maximum recovery and the complete re-use of the process water to be obtained in such a way as to limit drastically the provisioning of water of the plant and, at the same time, the quantity of discharge effluents.

In response to said need, systems have been proposed for treating the waters, generally indicated as "zero liquid discharge" systems, tending to obtain a practically complete recovery of the process waters and consequently reduce drastically, if not even eliminate, the flow of discharge water.

A traditional zero-liquid-discharge system is constituted by a modular evaporation line, i.e. a multiple-effect line, in which the main components of each effect are a heat exchanger and an evaporator proper, as well as a drier (for example, a thin-film drier); the crystallizer must be able to treat the entire flowrate of the discharges coming from the process, obtaining a distillate that, once condensed, can be recycled at the head of the plant, whilst the salts dissolved undergo the process of crystallization and are discharged as solids that can be shovelled away.

The systems of the type recalled herein, and other similar ones, present the drawback of having in general large dimensions, proving very cumbersome on account of the high flowrate to be treated; in addition, the known solutions entail high costs for investment, maintenance and management, requiring in particular relatively frequent ordinary and extraordinary maintenance of a specialist nature, there being necessary the intervention of skilled labour.

An aim of the present invention is to provide a system for treating the waters of an industrial plant, in particular of a plant for generating energy, that will be free from the drawbacks of the known art highlighted herein; in particular, an aim of the invention is to provide a system that will enable practically total recovery of the discharge waters with a very low energy consumption, enabling a significant reduction of the problems of overall dimensions and costs typical of the systems forming the subject of the known art.

In accordance with the above aims, the present invention relates to a system for treating the waters of an industrial plant, in particular a plant for generating energy, as defined in the annexed Claim 1.

The invention is described in detail in the following nonlimiting embodiment example, with reference to the figures of the annexed drawings, wherein:
- Figure 1 is a block diagram that illustrates the main parts of a system for treating the waters of an industrial plant, in particular a plant for generating energy, in accordance with the invention; and
- Figures 2, 3 and 4 are schematic illustrations of respective details of the system of Figure 1.

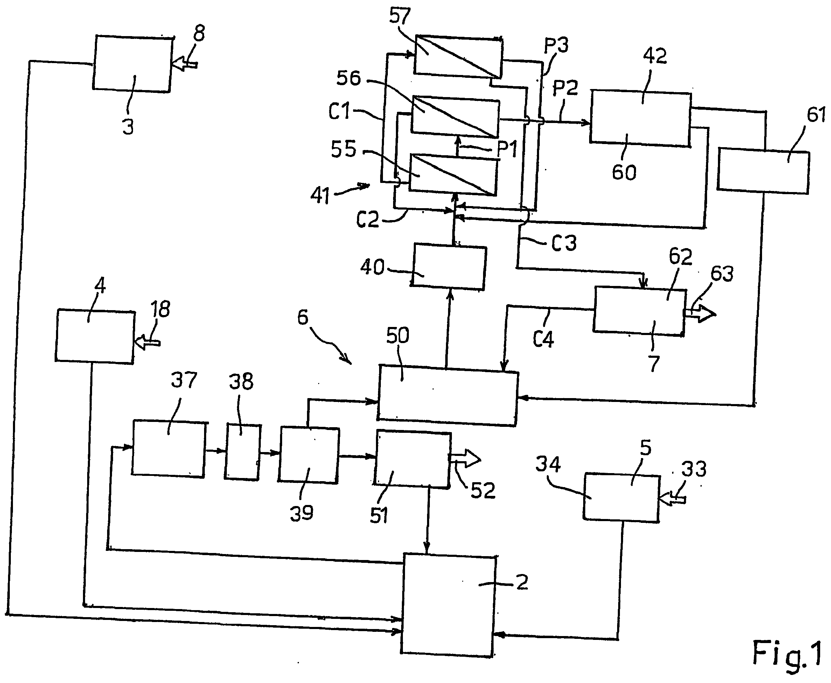

In Figure 1 designated as a whole by 1 is a system for treating the waters of an industrial plant, in particular a plant for generating energy (in itself known). The plant requires for its own operation a certain flowrate of water, designed for various functions, and produces discharge waters that are variously polluted by the different processes conducted in the plant.

The system 1 is an integrated system that manages substantially all the flows of water circulating in the plant and, in particular, treats the discharge waters and makes them available again for operation of the plant, thus reducing drastically, if not eliminating altogether, the need for fresh water from external sources.

In general terms, the system 1 comprises an initial collection basin 2, a biological section 3 for treatment of the biological waters, a de-oiling section 4 for treatment of the oily waters, a neutralization section 5, a demineralization section 6, and a crystallization section 7.

The basin 2, in which are collected the discharge waters coming from the different treatments and in particular the process waters coming from the biological section 3, the de-oiling section 4, and the neutralization section 5, in addition to possible reintegration from external sources (rain water, waters drawn from the water mains, wells, rivers, etc.), feeds the demineralization section 6.

The biological section 3 is designed for treatment of the biological waters (i.e. discharge waters having biological content) and, in particular, sanitary water of the plant (indicated schematically by the arrow 8 in Figure 1).

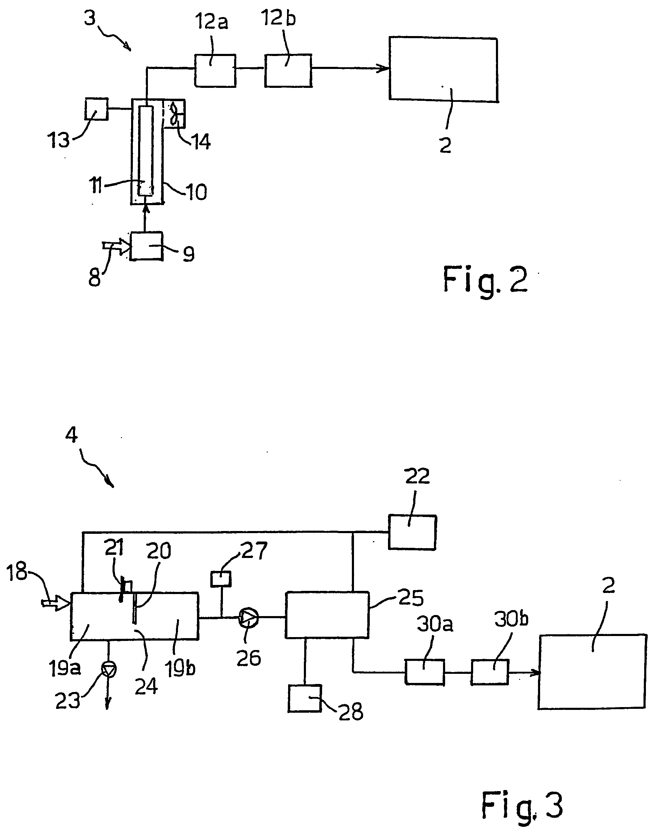

As illustrated in detail in Figure 2, the biological section 3 comprises a collection sump 9, in which the biological waters 8 of the plant are conveyed, a tower 10 that houses a vertical-column biofilter 11 having a biofilm formed by bacteria capable of oxidizing the organic substances, and a battery of filters 12, formed in particular by a sand filter 12a, and an activated-carbon filter 12b set in series. The biofilter 11 adopts a system with percolation on expanded-clay filling that enables the formation of a biofilm functioning also at low pollutant charges (percolation on percolation). For the purpose of favouring the formation of the biofilm a device 13 is provided for supplying suitable nutrients. The tower 10 is moreover provided with air fans 14 for the purpose of guaranteeing the aerobic environment necessary for the survival of the biofilm. The water depurated at output from the battery of filters 12 is sent to the basin 2.

The de-oiling section 4 is designed for the treatment of the oily waters, indicated by the arrow 18, namely, waters contaminated with oily residue, such as, for example, in a plant for generating energy, the drainage coming from the transformer area, the stock of tanks, the equipment lubricated with oil, the washing of floors, the natural-gas scrubbers, etc.

As illustrated in detail in Figure 3, the oily waters 18 are sent to a collection bath 19, divided into two chambers 19a, 19b by a divisory wall 20. The first chamber 19a ensures, thanks to an appropriate stay time, the primary separation of the sludge (including in the sludge also the inert materials that can readily settle) and of the suspended solids. A surface skimmer 21 collects the separated oil, which flows in a tank 22, whilst the decanted materials are periodically evacuated by means of a pump 23 for sludge. The divisory wall 20 ensures that the oil separated off will remain in the first chamber 19a, whilst the water flows in the second chamber 19b through a bottom opening 24. The water from the second chamber 19b is sent to a flotator 25 of a DAF ("dissolved air flotator") type by means of a pump 26. A dosage device 27 feeds a de-emulsifier designed to break up the water-oil emulsions on the delivery branch of the pump 26.

The flotator 25 is a static flotator without moving parts and develops in height.

An air saturator 28 feeds to the flotator 25 an air-water mixture that separates the residual oil from the water. The oil is recovered from above and sent to the tank 22, whilst the flotated water is extracted from beneath and discharged to a battery of filters 30 (for example, a sand filter 30a and an activated-carbon filter 30b) prior to being conveyed to the basin 2.

The neutralization section 5 is designed for the treatment of the acidic/alkaline waters (and/or waters contaminated by chemical products in general) and hence receives, in particular, the drainage that derives from stocking and manipulation of chemical products (as well as from possible washing, with chemical products, of tanks, equipment, and premises), and the washing waters of the demineralization section 6. The acidic/alkaline waters (and/or waters contaminated by chemical products), indicated by the arrow 33 in Figure 1, are conveyed to a neutralization bath 34 and treated with soda and hydrochloric acid to obtain a pH comprised between approximately 6 and approximately 9. The main aim of the neutralization section 5 is in fact to provide a water having a pH close to neutrality to be sent to the basin 2. The water present in the neutralization bath 34 is continuously recycled until the pH reaches the desired value and then sent to the basin 2.

The demineralization section 6 is supplied by the basin 2 and comprises an oxidation unit 37, a degasser 38, a primary-filtration unit 39, a microfiltration unit 40, an inverse-osmosis unit 41, and an electrodeionization unit 42.

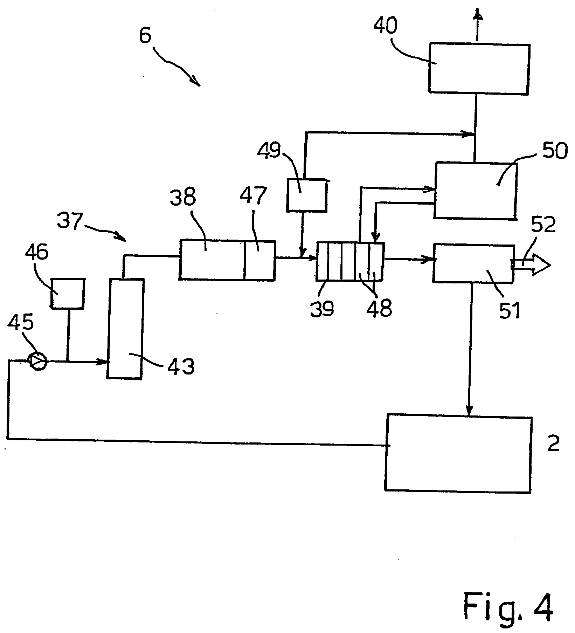

As illustrated in greater detail in Figure 4, the oxidation unit 37 comprises a pressurized oxidation tower 43, which is supplied with the water at output from the basin 2 via a pump 45, after prior mixing by means of an ejector with ozone coming from a production unit 46. The oxidation tower 43 has the dual purpose of oxidizing the iron present in solution and of abating the organic substances present. The oxidation tower 43 is characterized by a high turbulence of flow, such as to provide sedimentation of the oxidized material in the bottom part and enable instead evacuation of the suspended solids together with the oxidized water.

The oxidized water coming from the oxidation tower 43 is sent to the degasser 38, where the residual ozone is removed and destroyed in a thermocatalytic reactor 47 set on the outlet of the degasser 38, and then to the primary-filtration unit 39, comprising a battery of pressurized filters 48 with dual-layer (sand/anthracite) filtering bed. A dosage device 49 is provided for dosing sodium hypochlorite against the growth of micro-organisms, being regulated automatically as a function of the flowrate of water. In the filters 48, the coarser material with lower weight (anthracite) forms a top layer, which withholds the larger particles of the suspended solids, whilst the finer and heavier material (sand) forms a bottom layer, which, thanks to the smaller grains, withholds the finer particles. The filtered water coming from the filters 48 is conveyed to a homogenization bath 50, from which is taken the requirement for the various plant services. Back-washing of the filters 48 with air and water is envisaged. The water necessary for back-washing is collected by the homogenization bath 50 and is then supplied to a sludge-drying unit 51, of the filter-bag type. The water recovered is recycled into the basin 2, whilst the dried sludge (indicated by the arrow 52 in Figure 1) is collected to be sent on for discharge.

The water collected in the homogenization bath 50 is sent from here to the microfiltration unit 40, which comprises one or more microfilters, for example with polyamide mesh. Also in this case, a dosage of hypochlorite is effected, for example, exploiting the same dosage device used in the primary-filtration unit 39.

The water filtered is then subjected to a measurement of the value of SDI, to verify its suitability for supplying the inverse-osmosis unit 41 (SDI must be less than 3), and mixed with the concentrated solution (brine) coming from the electro-deionization unit 42. The pressure required by the osmosis membranes is achieved via high-pressure pumps. The temperature is controlled to prevent damage to the material of the membranes.

The inverse-osmosis unit 41 comprises three stages 55, 56, 57, each of which consists basically of a series of membranes made of a thin-film drying composite material, installed in pressure cylinders.

The first stage 55 produces a permeate P1 that feeds the second stage 56 and a concentrate C1 (brine) that feeds the third stage 57. The second stage 56, supplied with the permeate P1 of the first stage 55, produces a permeate P2 that feeds the electrodeionization unit 42, and a concentrate C2 (brine) that is recycled at the head of the inverse-osmosis unit 41 (i.e., at the first stage 55). The third stage 57, supplied with the concentrate C1 of the first stage 55, produces a permeate P3 that is recycled at the head of the inverse-osmosis unit 41 (i.e., at the first stage 55) and a concentrate C3 (brine) that is sent on, for a further concentration, to the crystallization section 7.

The electrodeionization unit 42 comprises a compact modular electro-deionizer 60 of a substantially known type, constituted by a plurality of chambers filled with anionic/cationic resins (mixed beds) alternating with sectors without resin and occupied by concentrated solution. The chambers are separated by alternately cationic and anionic membranes, whilst an electrical field is applied to the ends of the electro-deionizer.

The product of the electro-deionizer 60 is collected in a tank 61 of demineralized water (from which demineralized water is drawn off for the various plant services), whilst the discharge of the electro-deionizer 60 is recovered at the head of the inverse-osmosis unit 41.

The crystallization section 7 has the purpose of concentrating the concentrated solution C3 coming from the demineralization section 6 and comprises a low-temperature evaporator-crystallizer 62, in which the solution, brought into conditions of oversaturation, precipitates the amount of salt that exceeds the concentration of saturation, calculated at the working temperature. The evaporator-crystallizer 62 is substantially known and is constituted by a nest of tubes or heat exchanger of some other type, in which the fresh charge is brought into conditions of boiling, exploiting the heat of the steam produced that yields its own heat to the fresh charge, when it condenses. The concentrate is conveyed to a sludge-drying unit (for example, with bag filters), extracted from which are a solid 63 that can be shovelled away to be sent for disposal and a saturated concentrate C4 that is recovered in the basins upstream of the crystallization section.

From the foregoing description the advantages of the system according to the present invention emerge clearly.

In the first place, the system of the invention is particularly convenient from the standpoint of levels of energy consumption. The majority of the water is in fact recovered prior to reaching the crystallizer, in the inverse-osmosis unit and hence cold and without consuming steam, but using only a limited amount of electrical energy. The residual water, in a tiny amount, is then recovered in the crystallizer with an extremely limited consumption of steam and electrical energy. The total consumption of electrical energy is thus very limited, above all if compared with the known solutions, which, in order to obtain the same recovery, require a hot operation carried out using steam coming from the plant, or else using a much larger quantity of electrical energy.

The particular plant configuration of the inverse-osmosis unit thus enables a very high efficiency, around 97%. Consequently, also the sizing of the subsequent crystallization section is considerably reduced.

The crystallization section, considering the limited flowrate of water to be treated, can use thermocompression technology, which enables a significant saving on the materials as compared to the mechanical compression, in so far as, by operating in vacuum conditions, it enables operation at a lower temperature (60°C instead of 100°C) and hence the use of materials that are less noble and much less costly.

The system of the invention does not then require the use of acid and soda, as instead occurs in the traditional demineralization plants, thus eliminating any problem connected to the use and disposal of said products.

As a whole, the investment cost for the construction of the system of the invention is significantly lower than what is necessary for systems of a known type with comparable characteristics.

The system of the invention significantly reduces also the maintenance costs, in particular in so far as the replacement of the osmosis membranes and the electrodeionization cells is a simple and fast operation that does not require particularly skilled staff, and the reduced dimensions of the crystallizer lead to considerably lower maintenance costs as compared to the case of a larger crystallizer. I

Finally, it is clear that modifications and variations can be made to the system described and illustrated herein without thereby departing from the scope of the annexed claims.

## Claims

1. A system (1) for treating the waters of an industrial plant, in particular a plant for generating energy, comprising a homogenization bath (50) from which is taken the requirement for the various plant services, a biological section (3) for the treatment of biological waters, a de-oiling section (4) for the treatment of oily waters, a neutralization section (5) for the treatment of acidic/alkaline waters, a demineralization section (6), and a crystallization section (7), set in series downstream of the demineralization section (6) so as to receive a concentrated solution (C3) coming from the demineralization section (6) and send a saturated concentrate (C4) to the homogenization bath (50); the demineralization section (6) being connected, via the homogenization bath (50), to the biological section (3), the de-oiling section (4), and the neutralization section (5), in such a way to be supplied with the waters treated in the biological section (3), in the de-oiling section (4), in the neutralization section (5) and collected in the homogenization bath (50); the demineralization section (6) comprising a tank (61) of demineralized water from which demineralized water is drawn off for making available demineralized water for operation of the plant; and wherein the demineralization section (6) comprises an inverse-osmosis unit (41), which produces a permeate and a concentrate, and an electrodeionization unit (42), which is connected to the inverse-osmosis unit (41) for treating the permeate coming from the inverse-osmosis unit (41); and the crystallization section (7) is connected to the inverse-osmosis unit (41) in such a way to be supplied with the concentrate (C3) coming from the inverse-osmosis unit (41); the inverse-osmosis unit (41) comprising three stages (55, 56, 57) of which: the first stage (55) produces a permeate (P1) that feeds the second stage (56) and a concentrate (C1) that feeds the third stage (57); the second stage (56) produces a permeate (P2), exiting from the inverse-osmosis unit (41) and feeding the electrodeionization unit (42), and a concentrate (C2) that is recycled at the first stage (55); the third stage (57) produces a permeate (P3) that is recycled at the first stage (55) and said concentrated solution (C3) exiting from the inverse-osmosis unit (41) and sent on, for a further concentration, to the crystallization section (7).

2. A system according to Claim 1, **characterized in that** the permeate (P2) of the second stage (56) feeds an electrodeionization unit (42), which produces demineralized water and a concentrated discharge, which is recovered at the head of the inverse-osmosis unit (41).

3. A system according to Claim 1 or 2, **characterized in that** the crystallization section (7) comprises a low-temperature evaporator-crystallizer (62), in which the concentrate (C3) coming from the demineralization section (6), brought into conditions of oversaturation, precipitates the amount of salt that exceeds the concentration of saturation, calculated at the working temperature.

4. A system according to any one of the preceding Claims, **characterized in that** the demineralization section (6) moreover comprises an oxidation unit (37), a primary-filtration unit (39) and a microfiltration unit (40), set in series upstream of the inverse-osmosis unit (41).

5. A system according to Claim 4, **characterized in that** the oxidation unit (37) comprises a pressurized oxidation tower (43) that is designed to have a high turbulence of flow, such as to provide the sedimentation of the oxidized material in the bottom part and to enable instead evacuation of the suspended solids together with the oxidized water.

6. A system according to any one of the preceding claims, **characterized in that** the biological section (3) comprises a vertical column biofilter (11) having a biofilm formed by bacteria capable of oxidizing the organic substances and functioning by percolation on percolation.

7. A system according to any one of the preceding claims, **characterized in that** the de-oiling section (4) comprises a collection bath (19) for a primary separation of sludge and suspended solids, and a DAF ("dissolved air flotator") (25), supplied with an air-water mixture by an air saturator (28) for the separation of the residual oil from the water.

8. A system according to any one of the preceding claims, **characterized in that** the de-oiling section (4) comprises a static flotator (25) without moving parts and with development in height.

## Patentansprüche

1. Ein System (1) zur Behandlung der Abwässer einer Industrieanlage, vor allem eines Kraftwerks, umfassend
ein Homogenisierungsbad (50), aus welchem der Bedarf für die verschiedenen Abteilungen der Anlage entnommen werden,
einen biologischen Bereich (3), zur Behandlung von biologischen Abwässern,
einen Entölungsbereich (4), zur Behandlung von öligen Abwässern,
einen Neutralisierungsbereich (5), zur Behandlung von sauren bzw. alkalischen Abwässern,
einen Entmineralisierungsbereich (6) und
einen Kristallisationsbereich (7), der in Reihe mit und in Fließrichtung nach dem Entmineralisierungsbereich (6) angeordnet ist, um so eine konzentrierte Lösung (C3), welche aus dem Entmineralisierungsbereich (6) kommt, aufzunehmen und um ein gesättigtes Konzentrat (C4) zum Homogenisierungsbad (50) weiterzuleiten;
wobei der Entmineralisierungsbereich (6) über das Homogenisierungsbad (50) mit dem biologischen Bereich (3), dem Entölungsbereich (4) und dem Neutralisierungsbereich (5) verbunden ist, um auf diese Weise die im biologischen Bereich (3), im Entölungsbereich (4) und im Neutralisierungsbereich (5) behandelten und im Homogenisierungsbad (50) gesammelten Abwässer zugeleitet zu bekommen;
wobei der Entmineralisierungsbereich (6) einen Tank (61) mit entmineralisiertem Wasser umfasst, aus welchem entmineralisiertes Wasser entzogen wird, um entmineralisiertes Wasser für den Betrieb der Anlage zur Verfügung zu stellen; und
wobei der Entmineralisierungsbereich (6) eine Einheit (41) für umgekehrte Osmose, welche ein Permeat und ein Konzentrat herstellt, und eine Einheit für Elektro-Deionisierung (42) umfasst, welche mit der Einheit (41) für umgekehrte Osmose verbunden ist, um das aus der Einheit (41) für umgekehrte Osmose kommende Permeat zu behandeln;
und der Kristallisationsbereich (7) mit der Einheit (41) für umgekehrte Osmose verbunden ist, um auf diese Weise das aus der Einheit (41) für umgekehrte Osmose kommende Konzentrat (C3) zugeleitet zu bekommen;
wobei die Einheit (41) für umgekehrte Osmose drei Stufen (55, 56, 57) umfasst, von welchen die erste Stufe (55) ein Permeat (P1), welches die zweite Stufe (56) versorgt, und ein Konzentrat (C1) herstellt, welches die dritte Stufe (57) versorgt,
die zweite Stufe (56) ein Permeat (P2), welches aus der Einheit (41) für umgekehrte Osmose austritt und die Einheit für Elektro-Deionisierung (42) versorgt, und ein Konzentrat (C2), welches in der ersten Stufe (55) recycelt wird, herstellt,
die dritte Stufe (57) ein Permeat (P3), welches in der ersten Stufe (55) recycelt wird und die konzentrierte Lösung (C3) herstellt, welche aus der Einheit (41) für umgekehrte Osmose austritt und für weitere Konzentration zum Kristallisationsbereich (7) weitergeleitet wird.

2. Ein System (1) nach Anspruch 1, **dadurch gekennzeichnet, dass** das Permeat (P2) aus der zweiten Stufe (56) eine Einheit für Elektro-Deionisation (42) versorgt, welche entmineralisiertes Wasser sowie einen konzentrierten Ausfluss produziert, welcher am Anfang der Einheit (41) für umgekehrte Osmose rückgewonnen wird.

3. Ein System nach Anspruch 1 oder 2, **dadurch gekennzeichnet, dass** der Kristallisationsbereich (7) einen Niedrigtemperaturverdampfer und -kristallisator (62) umfasst, in welchem aus dem Konzentrat (C3), das aus dem Entmineralisierungsbereich (6) kommt, nachdem es in Übersättigungszustände gebracht wurde, der Salzgehalt ausgefällt wird, welcher die Sättigungskonzentration übersteigt, welche bei Betriebstemperatur ermittelt wird.

4. Ein System nach einem der vorhergehenden Ansprüche, **dadurch gekennzeichnet, dass** der Entmineralisierungsbereich (6) darüber hinaus eine Oxidationseinheit (37), eine Primärfiltereinheit (39) und eine Mikrofiltereinheit (40) umfasst, welche in Reihe in Fließrichtung vor der Einheit (41) für umgekehrte Osmose angeordnet sind.

5. Ein System nach Anspruch 4, **dadurch gekennzeichnet, dass** die Oxidationseinheit (37) einen unter Druck stehenden Oxidationsturm (43) umfasst, der so ausgelegt ist, dass die Strömung hohe Turbulenz aufweist, um auf diese Weise die Sedimentation von oxidiertem Material im unteren Bereich zu gewährleisten und um anstatt dessen die Evakuierung der festen Schwebstoffe zusammen mit dem oxidierten Wasser zu ermöglichen.

6. Ein System nach einem der vorhergehenden Ansprüche, **dadurch gekennzeichnet, dass** der biologische Bereich (3) einen Biofilter (11) in Form einer senkrechten Säule umfasst, der einen Biofilm aufweist, welcher aus Bakterien besteht, die in der Lage sind, organische Substanzen zu oxidieren und welcher durch Perkolation auf Perkolation funktioniert.

7. Ein System nach einem der vorhergehenden Ansprüche, **dadurch gekennzeichnet, dass** der Entölungsbereich (4) ein Sammelbad (19) für eine primäre Trennung von Schlamm und festen Schwebstoffen umfasst, und dass er einen DAF (Dissolved Air Flotator = Druckentspannungsflotator) (25) umfasst, der zum Zwecke der Trennung des Restöls vom Wasser durch eine Luftsättigungsvorrichtung (28) mit einer Luft-Wasser-Mischung versorgt wird.

8. Ein System nach einem der vorhergehenden Ansprüche, **dadurch gekennzeichnet, dass** der Entölungsbereich (4) einen statischen Flotator (25) ohne bewegliche Teile und mit Entwicklung in die Höhe umfasst.

## Revendications

1. Système (1) destiné à traiter les eaux d'une installation industrielle, en particulier une installation destinée à générer de l'énergie, comprenant un bain d'homogénéisation (50) duquel est prise l'exigence pour les divers services d'installation, une section biologique (3) pour le traitement d'eaux biologiques, une section de déshuilage (4) pour le traitement d'eaux huileuses, une section de neutralisation (5) pour le traitement d'eaux acides/alcalines, une section de déminéralisation (6), et une section de cristallisation (7), installée en série en aval de la section de déminéralisation (6) de façon à recevoir une solution concentrée (C3) en provenance de la section de déminéralisation (6) et à envoyer un concentré saturé (C4) vers le bain d'homogénéisation (50) ; la section de déminéralisation (6) étant raccordée, via le bain d'homogénéisation (50), à la section biologique (3), la section de déshuilage (4), et la section de neutralisation (5), d'une façon telle à être alimentée en les eaux traitées dans la section biologique (3), dans la section de déshuilage (4), dans la section de neutralisation (5) et collectée dans le bain d'homogénéisation (50) ; la section de déminéralisation (6) comprenant un réservoir (61) d'eau déminéralisée duquel l'eau déminéralisée est retirée pour rendre disponible l'eau déminéralisée pour le fonctionnement de l'installation ; et dans lequel la section de déminéralisation (6) comprend une unité d'osmose inverse (41), qui produit un perméat et un concentré, et une unité d'électrodésionisation (42), qui est raccordée à l'unité d'osmose inverse (41) pour traiter le perméat en provenance de l'unité d'osmose inverse (41) ; et la section de cristallisation (7) est raccordée à l'unité d'osmose inverse (41) d'une façon telle à être alimentée en le concentré (C3) en provenance de l'unité d'osmose inverse (41) ; l'unité d'osmose inverse (41) comprenant trois étages (55, 56, 57) dont : le premier étage (55) produit un perméat (P1) qui alimente le deuxième étage (56) et un concentré (C1) qui alimente le troisième étage (57) ; le deuxième étage (56) produit un perméat (P2), sortant de l'unité d'osmose inverse (41) et alimentant l'unité d'électrodésionisation (42), et un concentré (C2) qui est recyclé au niveau du premier étage (55) ; le troisième étage (57) produit un perméat (P3) qui est recyclé au niveau du premier étage (55) et ladite solution de concentré (C3) sortant de l'unité d'osmose inverse (41) et étant envoyée, pour une concentration supplémentaire, vers la section de cristallisation (7).

2. Système selon la revendication 1, **caractérisé en ce que** le perméat (P2) du deuxième étage (56) alimente une unité d'électrodésionisation (42), qui produit une eau déminéralisée et un rejet concentré, qui est récupéré au niveau de la tête de l'unité d'osmose inverse (41).

3. Système selon la revendication 1 ou 2, **caractérisé en ce que** la section de cristallisation (7) comprend un évaporateur-cristalliseur à basse température (62), dans lequel le concentré (C3) en provenance de la section de déminéralisation (6), amené à des conditions de sursaturation, précipite la quantité de sel qui dépasse la concentration de saturation, calculée à la température de fonctionnement.

4. Système selon l'une quelconque des revendications précédentes, **caractérisé en ce que** la section de déminéralisation (6) comprend en outre une unité d'oxydation (37), une unité de filtration primaire (39) et une unité de microfiltration (40), installées en série en amont de l'unité d'osmose inverse (41).

5. Système selon la revendication 4, **caractérisé en ce que** l'unité d'oxydation (37) comprend une tour d'oxydation sous pression (43) qui est conçue pour avoir une turbulence de flux élevée, de façon à permettre la sédimentation du matériau oxydé dans la partie inférieure et à permettre plutôt l'évacuation des solides en suspension conjointement avec l'eau oxydée.

6. Système selon l'une quelconque des revendications précédentes, **caractérisé en ce que** la section biologique (3) comprend un biofiltre de colonne verticale (11) ayant un biofilm formé par des bactéries capables d'oxyder les substances organiques et fonctionnant par percolation sur percolation.

7. Système selon l'une quelconque des revendications précédentes, **caractérisé en ce que** la section de déshuilage (4) comprend un bain de collecte (19) pour une séparation primaire de boue et de solides en suspension, et un FAD (« flottateur à air dissous ») (25), alimenté en un mélange air-eau par un saturateur d'air (28) pour la séparation de l'huile résiduelle de l'eau.

8. Système selon l'une quelconque des revendications précédentes, **caractérisé en ce que** la section de déshuilage (4) comprend un flottateur statique (25) sans parties mobiles et avec un développement en hauteur.
